# FASCICULE DE BREVET EUROPEEN

(11) **EP 2 194 293 B1**
(45) Date de publication et mention de la délivrance du brevet: **28.09.2011**
(21) Numéro de dépôt: 09306173.7
(22) Date de dépôt: 03.12.2009
(51) Int. Cl.: F16H 3/091

(54) **Boîte de vitesses à passages sous couple à trois arbres parallèles**
Unter Drehmoment schaltendes Getriebe mit drei parallelen Wellen
Gearbox shifting under torque with three parallel shafts

(30) Priorité: 03.12.2008 FR 0858213
(43) Date de publication de la demande: 09.06.2010
(73) Titulaire: Renault s.a.s., 92100 Boulogne-Billancourt (FR)
(72) Inventeur: Raoul, Michel, 78990 Elancourt (FR)

(56) Documents cités:
- EP-A- 0 375 420
- JP-A- 11 148 537
- JP-A- 2004 144 120

## Description

L'invention concerne une boîte de vitesses manuelle ou robotisée de véhicule automobile.

Elle concerne plus particulièrement une boîte de vitesses à trois arbres parallèles à engrenages et à passages sous couple.

Cette boîte de vitesses comprend notamment un arbre primaire unique portant un ensemble de dentures fixes, deux arbres secondaires non concentriques qui portent des pignons fous engrenant avec lesdites dentures fixes et susceptibles d'être couplés sélectivement avec l'arbre qui les porte par des dispositifs de couplage pour engager les différents rapports de la boîte.

Selon une disposition connue, le premier arbre secondaire de la boîte porte une couronne de descente attaquant directement une couronne de différentiel, tandis que le deuxième arbre secondaire dispose de moyens de renvoi sur le premier.

Si, contrairement à cette disposition, chaque arbre secondaire présentait un pignon de descente attaquant la même couronne de différentiel, ces deux pignons de descente pourraient être de même taille, ou de tailles différentes.

Dans le premier cas, les entraxes entre l'arbre primaire et chaque arbre secondaire seraient différents. Généralement, une même denture fixe de l'arbre primaire engrène alors avec deux pignons fous portés chacun par un des arbres secondaires pour obtenir deux rapports de démultiplication différents. Cette disposition, appelée « triplette », réduit l'encombrement axial de la boîte, mais limite le choix des démultiplications.

Dans le second cas, les entraxes entre l'arbre primaire et chaque arbre secondaire seraient en principe égaux, et on retrouverait également dans la boîte au moins une « triplette », avec les avantages et les inconvénients particuliers liés à celle-ci.

Par ailleurs, dans la plupart des boîtes de vitesses à trois arbres connues, l'un des arbres secondaires est en position dite basse, et le second en position haute. Les dispositifs de crabotage et les fourchettes de commande associés sont alors répartis entre le bas et le haut de la boîte et, pour cette raison, le dispositif de commande des changements de rapports est complexe.

Une boîte de vitesses à arbres parallèles à engrenages et à passages sous couple est connu du JP11148537, qui montre toutes les caractéristiques techniques du préambule de la revendication 1.

Selon une autre disposition, connue dans la publication EP 1 798 445, une boîte de vitesses à passages sous couple peut posséder, comme les boîtes conventionnelles, un arbre d'entrée unique, un seul embrayage d'entrée, et deux arbres secondaires.

Selon cette publication, le premier arbre secondaire (principal) porte un pignon de descente attaquant directement la couronne, et le deuxième arbre secondaire (auxiliaire) entraîne l'arbre secondaire principal par l'intermédiaire de deux couples de pignons porté par un arbre intermédiaire. Cet arbre intermédiaire supplémentaire porte également le pignon intermédiaire de marche arrière. Cette disposition apporte un gain de compacité axial de la boîte, une facilité dans la conception de la commande interne, et davantage de liberté dans l'établissement des étagements. En revanche, elle nécessite un arbre supplémentaire.

Pour réaliser un gain additionnel en compacité, et une réduction du coût de fabrication, tout en conservant les avantages énoncés ci-dessus, l'invention propose un nouvel agencement interne, permettant de se dispenser d'un arbre intermédiaire supplémentaire.

Elle prévoit ainsi que les moyens de renvoi du deuxième arbre secondaire sur le premier arbre secondaire soient constitués d'un pignon fixe d'entrée porté par le deuxième arbre secondaire, d'un pignon fou intermédiaire porté pair l'arbre primaire, et d'un pignon fixe de sortie porté par le premier arbre secondaire.

Selon une autre caractéristique, le pignon fou intermédiaire de marche arrière, est porté par l'arbre secondaire auxiliaire. L'inversion de sens de rotation nécessaire pour établir la marche arrière est alors obtenue par un double engrènement : le premier entre le pignon fixe appartenant à l'arbre primaire et le pignon intermédiaire, porté par l'arbre secondaire auxiliaire, et le second, entre le pignon intermédiaire de marche arrière et le pignon fou de marche arrière porté par l'arbre secondaire principal.

D'autres caractéristiques et avantages de la présente invention seront mieux compris à la lecture de la description suivante d'un mode de réalisation non limitatif de celle-ci, en se reportant aux dessins annexés, sur lesquels :
- la figure 1 est une vue en coupe longitudinale et à plans rabattus passant l'arbre secondaire auxiliaire, l'arbre primaire, l'arbre secondaire principal, et le différentiel,
- la figure 2 est une vue schématique en coupe transversale montrant le positionnement relatif des arbres,
- la figure 3 est une vue schématique en coupe transversale, montrant les engrènements permettant de réaliser le renvoi de mouvement de l'arbre secondaire auxiliaire à l'arbre secondaire principal, et
- la figure 4 est une vue schématique en coupe transversale montrant les engrènements permettant de réaliser le mouvement de marche arrière.

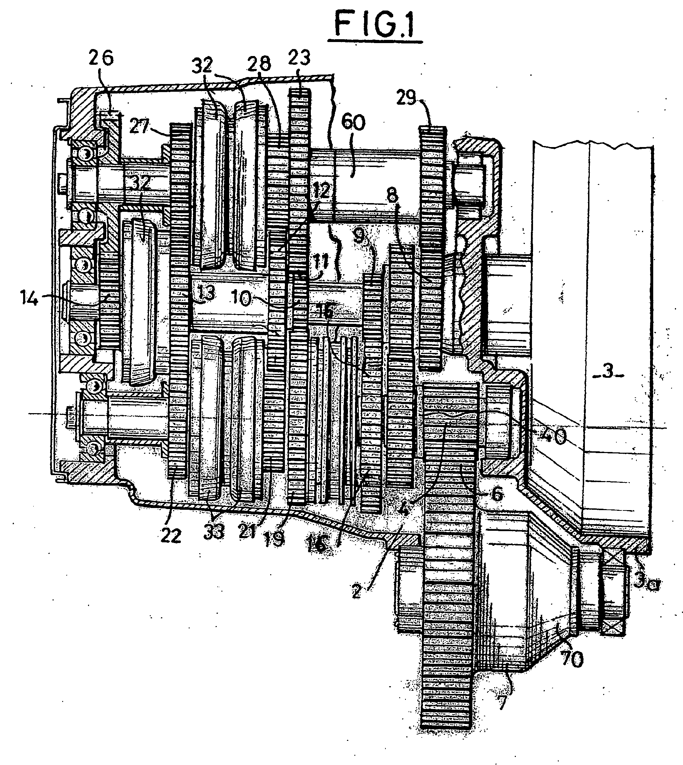

La boîte de vitesses illustrée par la figure 1, comporte un seul arbre primaire 10 monté en rotation dans un carter de mécanisme 2, et entraîné par un moteur (non représenté) par un embrayage d'entrée 3, de type classique, simple, sec ou humide, logé dans un carter d'embrayage 3a. La boîte de vitesses comporte deux arbres secondaires non concentriques, un premier arbre secondaire 40, dit principal, et un deuxième arbre secondaire 60 dit auxiliaire, de manière à transmettre le couple du moteur aux roues du véhicule, par l'intermédiaire d'un différentiel 70.

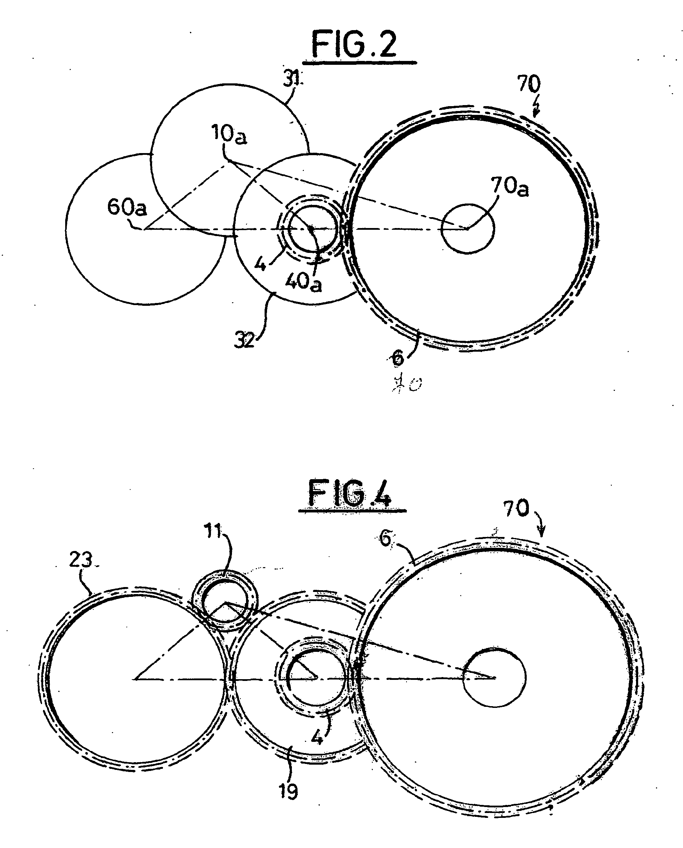

La figure 2, montre la disposition spatiale des arbres 10, 40, 60, et du différentiel 70. L'axe 10a du primaire 10, définit un triangle avec les axes 40a et 60a des arbres secondaires. L'arbre primaire est en partie supérieure de la boîte, soit au dessus des axes 40a, 60a, 70a des deux arbres secondaires et du différentiel. L'encombrement de la boîte est déterminé par celui des coupleurs coniques : coupleur de seconde 31 pour la ligne primaire, coupleur de troisième cinquième 32 pour la ligne secondaire principale, et coupleur de quatrième sixième 33 pour la ligne secondaire auxiliaire. Enfin, l'encombrement du différentiel 70 est déterminé par sa couronne de pont 6.

En revenant à la figure 1, on voit que l'arbre primaire unique 10 porte un ensemble de dentures fixes 9, 11, 12, 13 et un pignon fou 14. Les deux arbres secondaires 40, 60 portent des pignons fous 16, 19, 21, 22, 27, 28, 23, engrenant avec lesdites dentures fixes et susceptibles d'être couplés sélectivement avec l'arbre qui les porte par des dispositifs de couplage 18 31, 32, 33, pour engager les différents rapports de la boîte.

Le premier arbre secondaire 40 présente un pignon d'attaque 4 sur la couronne de pont 6 du différentiel 70. Mais le deuxième arbre secondaire 60 ne porte pas de tel pignon d'attaque, car son mouvement est transmis au différentiel 70 par l'intermédiaire du premier, et de moyens de renvoi 8, 24, 29 sur celui-ci.

De la droite vers la gauche, l'arbre primaire 10 porte un pignon double intermédiaire fou 8, renvoyant le mouvement du deuxième arbre secondaire 60 sur le premier 40, un pignon fixe de première 9, un pignon fixe de marche arrière 11, un pignon fixe de cinquième et de sixième 12, un pignon fixe de troisième et de quatrième 13, et un pignon fou de deuxième 14.

Les pignons fous sont disposés de la façon suivante. Le pignon fou de première 16, monté sur une roue libre (non représentée) sous sa bague crabot, est porté par l'arbre secondaire principal 40, ainsi que le pignon fou de marche arrière 19. L'arbre secondaire principal 40 porte également les pignons fous de sixième 21, et de quatrième 22, ainsi qu'un pignon fixe de sortie de renvoi 24 vers le deuxième arbre secondaire 60. Ce dernier porte, de la gauche vers la droite, le pignon fixe de deuxième 26, le pignon fou de troisième 27, le pignon fou de cinquième 28, un pignon intermédiaire de marche arrière 23, et un pignon fixe d'entrée de renvoi 29. Enfin, comme indiqué ci-dessus, le pignon fou de deuxième 14 est porté par le primaire 10.

Les pignons fous de première 16, de marche arrière 19, des rapports de rang pair supérieur à deux 21, 22 sont sur le premier arbre secondaire 40, tandis que les pignons fous de rang impair supérieur à un 27, 28, ainsi que le pignon fixe de deuxième 26, sont portés par le deuxième arbre secondaire 60. Les pignons fous de rang supérieur à un de même parité 21, 22 et 27, 28, sont donc groupés par deux, à l'exception du pignon fou de deuxième 26, qui est isolé. Enfin, le pignon fou de première 16 est monté sur une roue libre (non visible sur la figure), autour de son cône crabot. La boîte peut ainsi disposer de six rapports de marche avant et d'un rapport de marche arrière.

Les moyens de couplage des pignons fous sur leur arbre sont composés :
- d'un synchroniseur à crabots 18 entre les pignons fous de marche arrière 19 et de première 16, lui-même monté sur la roue libre 17 autour de sur son cône crabot 18a (par exemple selon la disposition illustrée par la publication EP 1 273 825), et
- de coupleurs coniques auto-assistés (par exemple tels que décrits dans la publication FR 2 821 652) 31, 32, 33 associés respectivement au pignon fou de seconde 14, aux pignons fous de troisième et de cinquième 27, 28, et aux pignons fous de quatrième et de sixième 22, 21.

En résumé, tous les dispositifs de couplage des rapports de rang supérieur à un sont des coupleurs coniques auto-assistés, tandis qu'entre les pignons fous de première et de marche arrière, on a un dispositif de synchronisation par crabotage. L'ensemble de ces moyens de couplage permet de ne pas « décraboter » la première pour passer sur les rapports supérieurs, et de passer tous ces rapports sous couple.

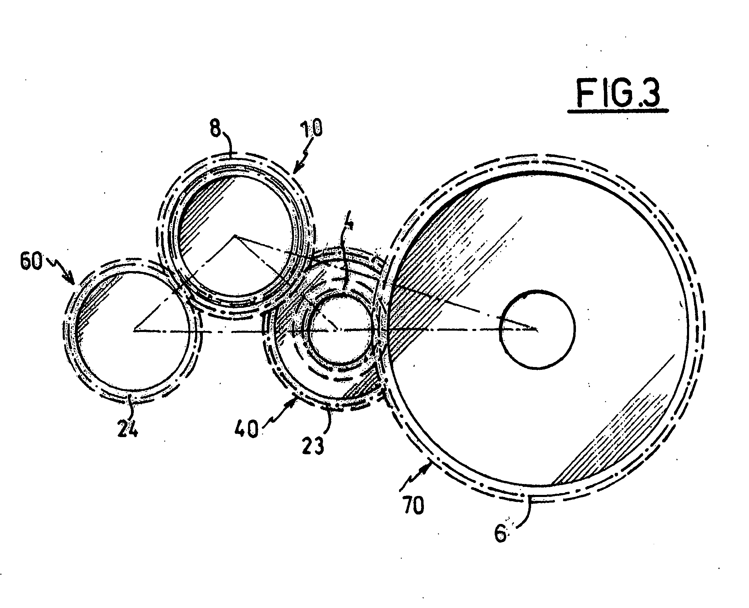

Sur la figure 3, on retrouve les moyens de renvoi entre les deux arbres secondaires. Le premier arbre secondaire 40 porte en effet un pignon d'attaque 4 de la couronne de pont 7, tandis que le deuxième arbre secondaire 60 dispose de moyens de renvoi 8, 24, 29 visibles sur cette figure. Ces moyens de renvoi sont constitués du pignon fixe d'entrée 24 porté par le deuxième arbre secondaire 60, d'un pignon fou intermédiaire 8 porté par l'arbre primaire 10, et d'un pignon fixe de sortie 29 porté par le premier arbre secondaire 40.

Le pignon intermédiaire 8 est un pignon double engrenant d'une part avec le pignon fixe d'entrée 24, et d'autre part avec le pignon fixe de sortie 29. Le pignon fixe d'entrée 24 engrène avec l'un des pignons du pignon double intermédiaire 8, alors que le pignon fixe de sortie 29 engrène avec l'autre, de sorte qu'on a une double inversion de rotation entre les deux arbres secondaires, qui tournent donc dans le même sens.

Sur la figure 4, on retrouve l'engrenage de marche arrière : le pignon fixe de marche arrière 11 sur le primaire 10, le pignon fou de marche arrière 19 sur secondaire principal 40, et le pignon intermédiaire de marche arrière 23, sur l'arbre secondaire auxiliaire 60. L'inversion de sens de rotation nécessaire pour établir la marche arrière est atteinte par un double engrènement : le premier entre le pignon fixe 11 et le pignon intermédiaire 23, et le second entre le pignon intermédiaire 23 et le pignon fou de marche arrière 19.

En conclusion, cette architecture permet de se passer d'un arbre intermédiaire supplémentaire pour renvoyer le mouvement d'un arbre secondaire sur l'autre. La fonction habituelle d'un tel arbre intermédiaire est en effet reprise, d'une part par l'arbre primaire, qui supporte le pignon intermédiaire de renvoi de mouvement de l'arbre secondaire auxiliaire vers l'arbre secondaire principal, et d'autre part par l'arbre secondaire auxiliaire, qui supporte le pignon intermédiaire de marche arrière.

## Revendications

1. Boîte de vitesses à arbres parallèles à engrenages et à passages sous couple, comprenant un arbre primaire unique (10) portant un ensemble de dentures fixes (9, 11, 12, 13) deux arbres secondaires non concentriques (40, 60) qui portent des pignons fous (16, 19, 21, 22, 27, 28) engrenant avec lesdites dentures fixes et susceptibles d'être couplés sélectivement avec l'arbre qui les porte par des dispositifs de couplage (18, 31, 32, 33) pour engager les différents rapports de la boîte, le premier arbre secondaire (40) portant un pignon d'attaque directe (4) d'une couronne de différentiel (7) tandis que le deuxième arbre secondaire (60) dispose de moyens de renvoi (8, 24, 29) sur le premier, constitués d'un pignon fixe d'entrée (29) porté par le deuxième arbre secondaire (60), d'un pignon fou intermédiaire (8) porté par l'arbre primaire (10), et d'un pignon fixe de sortie (24) porté par le premier arbre secondaire (40), **caractérisée en ce que** les pignons fous de rang supérieur à un de même parité (21, 22 ; 27, 28) sont groupés par deux, à l'exception du pignon fou de deuxième (14) qui est isolé.

2. Boîte de vitesses selon la revendication 1 ou 2, **caractérisée en ce que** le pignon intermédiaire (8) est un pignon double engrenant d'une part avec le pignon fixe d'entrée (24) et d'autre part avec le pignon fixe de sortie (29).

3. Boîte de vitesses selon la revendication 1 ou deux, **caractérisée en ce qu'**elle comporte un pignon intermédiaire de marche arrière (23) porté par le deuxième arbre secondaire (60).

4. Boîte de vitesses selon l'une des revendications précédentes, **caractérisée en ce que** le pignon fou de deuxième (14) est porté par l'arbre primaire (10).

5. Boîte de vitesses selon l'une des revendications précédentes, **caractérisée en ce que** les dispositifs de couplage des rapports de rang supérieur à un (31, 32, 33) sont des coupleurs coniques auto-assistés.

6. Boîte de vitesses selon l'une des revendications précédentes, **caractérisée en ce** le pignon fou de première est monté sur une roue libre (17), et en ce qu'un dispositif de synchronisation par crabotage (18) est disposé entre les pignons fous de première (16) et de marche arrière (19).

7. Boîte de vitesses selon l'une des revendications précédentes, **caractérisée en ce que** les pignons fous de première (16), de marche arrière (19), des rapports de rang pair supérieur à deux (21, 22), sont portés par le premier arbre secondaire, tandis que les pignons fous de rang impair supérieur à un (27, 28) ainsi que le pignon fixe de deuxième (26) sont portés par le deuxième arbre secondaire (60).

8. Boîte de vitesses selon l'une des revendications précédentes, **caractérisée en ce qu'**elle dispose de six rapports de marche avant et d'un rapport de marche arrière.

## Claims

1. Gearbox with parallel shafts with meshing of gears and gear shifts under torque, comprising a single primary shaft (10) carrying a set of fixed tooth sets (9, 11, 12, 13), two non-concentric secondary shafts (40, 60) carrying idling pinions (16, 19, 21, 22, 27, 28) that mesh with the said fixed tooth sets and can be coupled selectively to the shaft that carries them by coupling devices (18, 31, 32, 33) so as to engage the various gear ratios in the box, the first secondary shaft (40) carrying a pinion (4) that acts directly on a differential ring gear (7) while the second secondary shaft (60) has means (8, 24, 29) of transfer to the first, these means consisting of a fixed input pinion (24) carried by the second secondary shaft (60), of an intermediate idling pinion (8) carried by the primary shaft (10), and a fixed output pinion (29) carried by the first secondary shaft (40), **characterized in that** the idling pinions of rank higher than one and of the same parity (21, 22; 27, 28) are grouped in pairs, with the exception of the second-gear idling pinion (14) which is isolated.

2. Gearbox according to Claim 1 or 2, **characterized in that** the intermediate pinion (8) is a double pinion meshing firstly with the fixed input pinion (24) and secondly with the fixed output pinion (29).

3. Gearbox according to Claim 1 or 2, **characterized in that** it comprises an intermediate reverse-gear pinion (23) carried by the second secondary shaft (60).

4. Gearbox according to one of the preceding claims, **characterized in that** the second-gear idling pinion (14) is carried by the primary shaft (10).

5. Gearbox according to one of the preceding claims, **characterized in that** the coupling devices for the gear ratios of rank higher than one (31, 31, 33) are self-assisted conical couplers.

6. Gearbox according to one of the preceding claims, **characterized in that** the first-gear idling pinion is mounted on a free wheel (17), and **in that** a dog-clutch synchronizing device (18) is positioned between the first-gear (16) and reverse-gear (19) idling pinions.

7. Gearbox according to one of the preceding claims, **characterized in that** the idling pinions for first gear (16), for reverse gear (19) and for gear ratios of even rank higher than two (21, 22), are carried by the first secondary shaft, while the idling pinions of odd rank higher than one (27, 28) and the fixed second-gear pinion (26) are carried by the second secondary shaft (60).

8. Gearbox according to one of the preceding claims, **characterized in that** it has six forward gear ratios and one reverse gear ratio.

## Patentansprüche

1. Unter Drehmoment schaltendes, parallele Getriebewellen aufweisendes Getriebe, mit einer einzigen Eingangswelle (10), die eine Anordnung von feststehenden Verzahnungen (9, 11, 12, 13) trägt, und zwei nicht konzentrischen Ausgangswellen (40, 60), die Losräder (16, 19, 21, 22, 27, 28) tragen, die mit den feststehenden Verzahnungen in Eingriff stehen und durch Kopplungsvorrichtungen (18, 31, 32, 33) gezielt mit der sie tragenden Welle gekoppelt werden können, um die verschiedenen Gangstufen des Getriebes einzulegen, wobei die erste Ausgangswelle (40) ein Rad (4) zum direkten Einwirken auf ein Differenzial-Tellerrad (7) trägt, während die zweite Ausgangswelle (60) mit Vorgelegemitteln (8, 24, 29) auf der ersten versehen ist, die aus einem Festeingangsrad (24), das von der zweiten Ausgangswelle (60) getragen wird, einem Loszwischenrad (8), das von der Eingangswelle (10) getragen wird, und einem Festausgangsrad (29), das von der ersten Ausgangswelle (40) getragen wird, bestehen, **dadurch gekennzeichnet, dass** die Losräder der Gänge größer als eins mit gleicher Parität (21, 22; 27, 28) mit Ausnahme des Losrads (14) des zweiten Gangs, das isoliert ist, paarweise gruppiert sind.

2. Getriebe nach Anspruch 1 oder 2, **dadurch gekennzeichnet, dass** das Zwischenrad (8) ein Doppelrad ist, das einerseits mit dem Festeingangsrad (24) und andererseits mit dem Festausgangsrad (29) in Eingriff steht.

3. Getriebe nach Anspruch 1 oder 2, **dadurch gekennzeichnet, dass** es ein Rückwärtsgangzwischenrad (23) aufweist, das von der zweiten Ausgangswelle (60) getragen wird.

4. Getriebe nach einem der vorhergehenden Ansprüche, **dadurch gekennzeichnet, dass** das Losrad (14) des zweiten Gangs von der Eingangswelle (10) getragen wird.

5. Getriebe nach einem der vorhergehenden Ansprüche, **dadurch gekennzeichnet, dass** die Kopplungsvorrichtungen (31, 32, 33) der Gänge größer als eins selbstunterstützte Kegelverbinder sind.

6. Getriebe nach einem der vorhergehenden Ansprüche, **dadurch gekennzeichnet, dass** das Losrad des ersten Gangs an einem Freilauf (17) angebracht ist und dass eine Synchronisierklauenkupplungsvorrichtung (18) zwischen den Losrädern des ersten Gangs (16) und des Rückwärtsgangs (19) angeordnet ist.

7. Getriebe nach einem der vorhergehenden Ansprüche, **dadurch gekennzeichnet, dass** die Losräder des ersten Gangs (16), des Rückwärtsgangs (19), der geradzahligen Gänge größer als zwei (21, 22) von der ersten Ausgangswelle getragen werden, während die Losräder (27, 28) der ungeradzahligen Gänge größer als eins sowie das Festrad (26) des zweiten Gangs von der zweiten Ausgangswelle (60) getragen werden.

8. Getriebe nach einem der vorhergehenden Ansprüche, **dadurch gekennzeichnet, dass** es sechs Vorwärtsgänge und einen Rückwärtsgang aufweist.
